# EUROPEAN PATENT APPLICATION

(11) **EP 4 819 063 A1**
(43) Date of publication of application: **07.10.2026**
(21) Application number: 25224677.2
(22) Date of filing: 17.12.2025
(51) Int. Cl.: G06V 10/62, G06V 10/764, G06V 10/82, G06V 20/20, G06V 20/40, G06V 10/94

(54) **METHOD, APPARATUS, DEVICE, STORAGE MEDIUM AND PROGRAM PRODUCT FOR IMAGE RECOGNITION**

(30) Priority: 31.03.2025 CN 202510400134
(71) Applicant: Beijing Zitiao Network Technology Co., Ltd., Beijing 100190 (CN)
(72) Inventor: Li, Xuan, Beijing, 100028 (CN); Wang, Yue, Beijing, 100028 (CN); Li, Yao, Beijing, 100028 (CN)
(74) Representative: Marks & Clerk LLP

(57) **Abstract**

The disclosure provides a method, an apparatus, a device, a memory medium and a program product for image recognition. The method includes: presenting an image preview interface of visual data in response to determining that the visual data is to be captured; capturing at least one video frame via the image preview interface; presenting a first label in the image preview interface in response to obtaining the first label corresponding to a first object, the first label being determined based on object recognition performed on at least a first video frame that is captured; and presenting a first information interface in response to a trigger on the first label, the first information interface comprising information related to the first object.

## Description

### FIELD

Example embodiments of the present disclosure generally relate to the field of computers, and in particular, to a method, an apparatus, an electronic device, a computer-readable storage medium, and a computer program product for image recognition.

### BACKGROUND

With the development of information technology, various terminal devices may provide various services for people in work and life. For example, an application providing services may be deployed in the terminal device. The terminal device or the application may provide a digital assistant-type function for the user to assist the user in using the terminal device or the application. The user may perform diversified operations through various interactions with the digital assistant.

### SUMMARY

In a first aspect of the present disclosure, a method for image recognition is provided. The method includes: presenting an image preview interface of visual data in response to determining that visual data is to be captured; capturing at least one video frame via the image preview interface; presenting a first label in the image preview interface in response to obtaining the first label corresponding to a first object, the first label being determined based on object recognition performed on at least a first video frame that is captured; and presenting a first information interface in response to a trigger on the first label, the first information interface comprising information related to the first object.

In a second aspect of the present disclosure, an apparatus for image recognition is provided. The apparatus includes: an image preview interface presentation module configured to present an image preview interface of visual data in response to determining that the visual data is to be captured; a video frame capture module configured to capture at least one video frame via the image preview interface; a first label presentation module configured to present a first label in the image preview interface in response to obtaining the first label corresponding to a first object, the first label being determined based on object recognition performed on at least a first video frame that is captured; and an information interface presentation module configured to present a first information interface in response to a trigger on the first label, the first information interface comprising information related to the first object.

In a third aspect of the present disclosure, an electronic device is provided. The electronic device includes: at least one processing unit; and at least one memory, the at least one memory being coupled to the at least one processing unit and storing instructions executable by the at least one processing unit, the instructions, when executed by the at least one processing unit, causing the electronic device to perform the method of the first aspect.

In a fourth aspect of the present disclosure, a computer-readable storage medium is provided. The computer-readable storage medium stores a computer program which, when executed by a processor, causes the processor to perform the method of the first aspect.

In a fifth aspect of the present disclosure, a computer program product is provided. The computer program product is tangibly stored in a computer storage medium and includes computer-executable instructions which, when executed by a device, cause the device to perform the method of the first aspect.

It should be understood that the content described in the content part of the present disclosure is not intended to limit key features or important features of the embodiments of the present disclosure, and is also not intended to limit the scope of the present disclosure. Other features of the present disclosure will become readily understood through the following description.

### BRIEF DESCRIPTION OF THE DRAWINGS

The above and other features, advantages, and aspects of the embodiments of the present disclosure become more apparent with reference to the following detailed description and in conjunction with the drawings. In the drawings, the same or similar reference numerals represent the same or similar elements.
FIG. 1 illustrates a schematic diagram of an example environment in which the embodiments of the present disclosure may be implemented;
FIG. 2A to FIG. 2E illustrate example interfaces according to some embodiments of the present disclosure;
FIG. 3 illustrates an example of determining a label by a model according to some embodiments of the present disclosure;
FIG. 4 illustrates an example of label presentation according to some embodiments of the present disclosure;
FIG. 5 illustrates an example of a plurality of captured video frames according to some embodiments of the present disclosure;
FIG. 6 illustrates a flowchart of a method for image recognition according to some embodiments of the present disclosure;
FIG. 7 illustrates an illustrative structural block diagram of an apparatus for image recognition according to some embodiments of the present disclosure; and
FIG. 8 illustrates a block diagram of an electronic device in which one or more embodiments of the present disclosure may be implemented.

### DETAILED DESCRIPTION

Embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and the embodiments of the present disclosure are only used for illustrative purposes, and are not used to limit the protection scope of the present disclosure.

In the description of the embodiments of the present disclosure, the term "include/comprise" and similar terms thereof should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below.

In this specification, unless otherwise explicitly specified, performing a step "in response to A" does not mean that the step is performed immediately after "A", but may include one or more intermediate steps.

It may be understood that the data involved in the technical solution (including but not limited to the data itself, acquisition, use, storage or deletion of the data) should comply with requirements of corresponding laws, regulations and related provisions.

It may be understood that before using the technical solution disclosed in the embodiments of the present disclosure, the user shall be informed of the type, range of use, use scenarios, etc., of personal information involved in the present disclosure and the authorization of the user shall be obtained in an appropriate manner in accordance with relevant laws and regulations.

For example, in response to receiving an active request from the user, prompt information is sent to the user to clearly inform the user that the requested operation will require access to and use of the user's personal information, so that the user may independently choose whether to provide the personal information to software or hardware, such as an electronic device, an application, a server or a storage medium, that performs the operations of the technical solution of the present disclosure, based on the prompt information.

As an optional but non-restrictive implementation, in response to receiving the active request from the user, the prompt information may be sent to the user in the form of, for example, a pop-up window, in which the prompt information may be presented in text. Furthermore, the pop-up window may also include a selection control for the user to select "agree" or "disagree" to provide the personal information to the electronic device.

It may be understood that the above process of notifying and obtaining user authorization is only illustrative, and does not limit the implementations of the present disclosure. Other manners that satisfy the relevant laws and regulations may also be applied in the implementations of the present disclosure.

As used herein, the term "model" may learn a correlation between corresponding input and output from training data, so that a corresponding output may be generated for a given input after the training is completed. The generation of the model may be based on machine learning techniques. Deep learning is a machine learning algorithm that uses multiple layers of processing units to process input and provide corresponding output. A neural network model is an example of a model based on deep learning. Herein, the "model" may also be referred to as a "machine learning model", a "learning model", a "machine learning network" or a "learning network", which are used interchangeably herein.

The "neural network" is a machine learning network based on deep learning. The neural network may process input and provide corresponding output, and generally includes an input layer and an output layer, and one or more hidden layers between the input layer and the output layer. The neural network used in deep learning applications generally includes many hidden layers, thereby increasing the depth of the network. The layers of the neural network are connected in sequence, so that the output of the previous layer is provided as the input of the next layer. The input layer receives the input of the neural network, and the output of the output layer is the final output of the neural network. Each layer of the neural network includes one or more nodes (also referred to as processing nodes or neurons), and each node processes the input from the previous layer.

Generally, machine learning may roughly include three stages, that is, a training stage, a test stage, and an application stage (also referred to as an inference stage). In the training stage, a given model may be trained using a large amount of training data, and the parameter values are continuously updated through iteration, until the model may obtain consistent inference that meets the expected objective from the training data. Through training, the model may be considered to be able to learn the correlation from input to output (also referred to as mapping from input to output) from the training data. The parameter values of the trained model are determined. In the test stage, test input is applied to the trained model to test whether the model may provide correct output, thereby determining the performance of the model. The test stage may sometimes be integrated into the training stage. In the application or inference stage, the trained model may be used to process the actual model input based on the parameter values obtained from the training, to determine the corresponding model output.

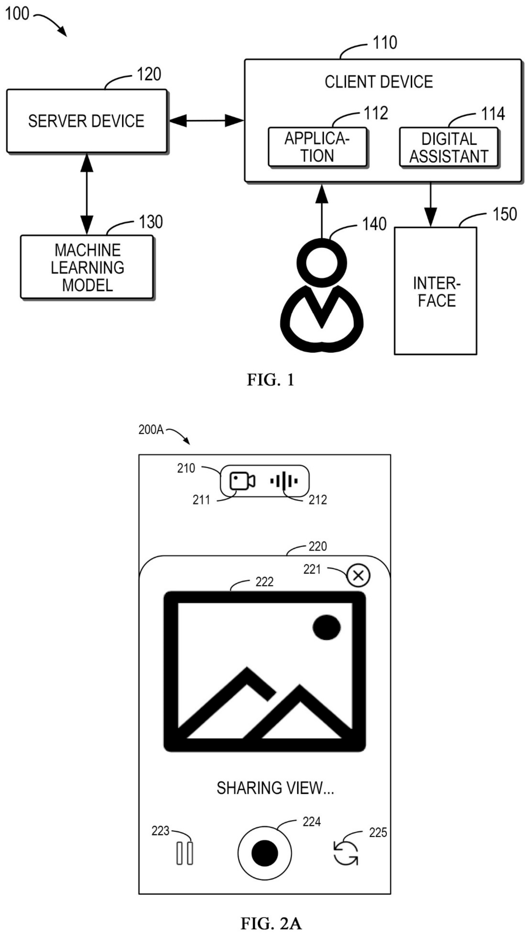

FIG. 1 is a schematic diagram of an example environment 100 in which the embodiments of the present disclosure may be implemented. In this example environment 100, an application 112 and a digital assistant 114 are installed in a client device 110. A user 140 may interact with the application 112 via the client device 110 and/or an attached device of the client device 110. In some implementations, the application 112 may be authorized to capture voice via an audio capture device (for example, a microphone) of the client device 110, capture images via an image capture device (for example, a camera) of the client device 110, and so on.

In some embodiments, the application 112 and the digital assistant 114 may be downloaded and installed in the client device 110. In some embodiments, the application 112 and the digital assistant 114 may also be accessed through other means, such as through a web page.

In the embodiments of the present disclosure, the application 112 may be any appropriate application having a response function, which may include, but is not limited to, one or more of the following: a chat application component (also referred to as an instant messaging application component), a browser application component, a planning application component, a document application component, an audio and video conference application component, an email application component, a task application component, a calendar application component, an objective and key results (OKR) application component, and so on. It may be understood that although a single application is shown in FIG. 1, multiple applications may actually be installed on the client device 110. In some embodiments, the application 112 may include a multi-functional collaboration platform, for example, an office collaboration platform (also referred to as an office suite) may provide integration of multiple types of business components to facilitate office, communication and other activities. In the multi-functional collaboration platform, people may launch different business components as needed to complete corresponding information processing, sharing, communication, etc.

In some embodiments, the digital assistant 114 may be provided by a separate application, or may be integrated in a certain application 112 that may provide content entities. The application business component used to provide the client interface of the digital assistant may correspond to a single function application business component or a multi-functional collaboration platform, such as an office suite or other collaboration platforms that may integrate multiple components. It may be understood that, similar to the application, although a single digital assistant is shown in FIG. 1, there may actually be multiple digital assistants.

In some embodiments, the digital assistant 114 supports the use of plugins. Each plugin may provide one or more functions of the application. Such plugins include, but are not limited to, one or more of the following: a search plugin, a contact plugin, a message plugin, a document plugin, a table plugin, an email plugin, a calendar plugin, a schedule plugin, a task plugin, and so on.

The digital assistant 114 is an intelligent assistant of the user, which has intelligent conversation and information processing capabilities. In the embodiments of the present disclosure, the digital assistant 114 is configured to interact with the user 140 to assist the user 140 in using the client device 110 or the application 112. In some embodiments, multiple interaction modes between the user 140 and the digital assistant 114 may be provided, and flexible switching between the multiple interaction modes is possible. When a certain interaction mode is triggered, a corresponding interaction area is presented to facilitate the interaction between the user 140 and the digital assistant 114. The interaction manners between the user 140 and the digital assistant 114 in different interaction modes are different, which may flexibly adapt to interaction requirements in different application scenarios.

In the environment 100, in response to the application 112 and/or the digital assistant 114 being launched, the client device 110 may present an interface 150 of the application 112 and/or the digital assistant 114. The interface 150 may include, for example, an interaction interface of the application 112 and the digital assistant 114. In some embodiments, an interaction window between the user 140 and the digital assistant 114 may be presented in the interface 150. In the interaction window, the user 140 may converse with the digital assistant 114 by inputting natural language, pictures, audio files, video files, web page files, etc., to indicate the digital assistant to assist in completing various tasks.

The interaction window between the digital assistant 114 and the user 140 may include a conversation window, for example, a conversation window in an instant messaging application or an instant messaging module of a specific application. In the conversation window, the interaction between the digital assistant 114 and the user 140 may be presented in the form of conversation messages. Alternatively or additionally, the interaction window between the digital assistant 114 and the user 140 may also include other types of windows, such as a floating window mode, in which the user 140 may trigger the digital assistant 114 to perform corresponding operations by inputting instructions, selecting quick instructions, etc.

In some embodiments, the digital assistant 114 may support the interaction mode of the conversation window, which is also referred to as the conversation mode. In this interaction mode, a conversation window between the user 140 and the digital assistant 114 is presented, and the user 140 and the digital assistant 114 interact through the conversation messages in the conversation window. In the conversation mode, the digital assistant 114 may perform tasks based on the conversation messages in the conversation window. In the interaction window, the user 140 inputs an interaction message, and the digital assistant 114 provides a reply message in response to the user input. By selecting the digital assistant 114, a conversation window with the digital assistant 114 may be opened. The conversation window may include interface elements for information interaction, such as an input box, a message list, a message bubble, etc.

In some embodiments, a communication connection is established between the client device 110 and the server device 120. The communication connection may be established by a wired or wireless means. The communication connection may include, but is not limited to, a Bluetooth connection, a mobile network connection, a universal serial bus (USB) connection, a wireless fidelity (WiFi) connection, etc., and the embodiments of the present disclosure are not limited in this regard. In the embodiments of the present disclosure, the client device 110 and the server device 120 may implement signaling interaction through the communication connection between them, to implement the supply of services of the application 112 and/or the digital assistant 114.

As shown in FIG. 1, the server device 120 may call a machine learning model 130 to support the response function of the application 112 based on the output of the machine learning model 130. The machine learning model 130 may be based on any appropriate model structure, including, but not limited to, a Transformer model, a convolutional neural network (CNN), a recurrent neural network (RNN), a deep neural network (DNN), etc. In some embodiments, the machine learning model 130 may be based on a language model (LM). The language model may have question answering capabilities through learning from a large amount of corpus. The machine learning model 130 may also be based on other appropriate models.

The machine learning model 130 may be deployed in the server device 120, or may be deployed in other devices. The machine learning model 130 may include one or more machine learning models. It should be noted that if the machine learning model 130 includes multiple machine learning models, the multiple machine learning models may have different structures, uses and functions, which is not limited by the present disclosure. It should be noted that a machine learning model (not shown in the figure) may also be deployed locally in the client device 110, and the client device 110 may also directly call the local machine learning model to support the response function of the application 112 based on the output of the local machine learning model.

The client device 110 may be any type of mobile terminal, fixed terminal or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the client device 110 may also support any type of user-specific interface (such as "wearable" circuitry, etc.).

The server device 120 may be an independent physical server, a server cluster or a distributed system composed of multiple physical servers, or may provide cloud services, cloud databases, cloud computing, cloud functions, cloud storage, network services, cloud communications, middleware services, domain name services, security services, content delivery networks, and basic cloud computing services such as big data and artificial intelligence platforms. The server device 120 may include, for example, a computing system/server, such as a mainframe, an edge computing node, a computing device in a cloud environment, and so on.

It should be understood that the structures and functions of various elements in the environment 100 are described for illustrative purposes only, without suggesting any limitation on the scope of the present disclosure.

As mentioned above, the user may perform diversified operations through various interactions with the digital assistant. The user may provide user input of at least one modality to the digital assistant, for example, the user may provide voice and images to the digital assistant. The digital assistant may then determine a corresponding response based on the received user input, for example, the digital assistant may perform image recognition on the received images and determine a response to the voice based on the recognition results. Traditionally, images are usually actively provided by the user, that is, the interaction process requires the active participation of the user, which may affect the efficiency of the interaction. The digital assistant may only determine the response based on the received images and voice, and cannot actively recognize and predict user needs, which also affects the efficiency of the interaction.

In view of this, according to the embodiments of the present disclosure, an improved solution for image recognition is provided. According to the solution of the embodiments of the present disclosure, an image preview interface of visual data is presented in response to determining that visual data is to be captured. At least one video frame is captured via the image preview interface. A first label is presented in the image preview interface in response to obtaining the first label corresponding to a first object, the first label being determined based on object recognition performed on at least a first video frame that is captured. A first information interface is presented in response to a trigger on the first label, the first information interface including information related to the first object.

In this way, automatic object recognition may be automatically performed on the environment where the client device is located via the image preview interface, to determine labels for presentation in the image preview interface. In this way, the user may trigger the labels as needed to obtain more relevant information about the objects appearing in the environment. This may enable automatic object recognition of the visual data and more interactions based on the recognition results, improving the convenience of information access and interaction efficiency for the user.

Some example embodiments of the present disclosure will be described below with continued reference to the drawings. The image recognition method involved in the present disclosure may be implemented in the client device 110. It should be noted that the operations performed by the client device 110 may be specifically performed by a related application and/or a digital assistant installed on the client device 110. Some operations described with reference to the client device 110 may require the assistance of the server device 120 to complete.

FIG. 2A to FIG. 2E illustrate example interfaces 200A to 200E (which may also be referred to as examples 200A to 200E for short) according to some embodiments of the present disclosure. The interfaces shown in the examples 200A to 200E may be presented at the client device 110. For the convenience of discussion, the examples 200A to 200E will be described with reference to the environment 100 of FIG. 1. It should be understood that the interfaces shown in the drawings are only examples, and various interface designs may actually exist. Each graphic element in the interface may have different arrangements and different visual representations, one or more of the elements may be omitted or replaced, and there may also be one or more other elements. The embodiments of the present disclosure are not limited in this regard.

A digital assistant (for example, the digital assistant 114) may be run in the client device 110. For example, the client device 110 may present an image preview interface of visual data in response to determining that the visual data is to be captured in an interaction process between a user (for example, the user 140) and the digital assistant. The visual data may include video and/or images. Referring to FIG. 2A, an example 200A shows an example of an interaction interface between the user and the digital assistant. The example 200A includes an area 210, and the area 210 includes a visual capture control 211 and a voice capture control 212. The client device 110 may respond to a trigger on the voice capture control 212 by initiating a voice capture state and capturing voice in the voice capture state.

The client device 110 may also respond to a trigger on the visual capture control 211 by determining that the visual data is to be captured, and then presenting the image preview interface 220. The client device 110 may respond to the presentation of the image preview interface 220 by turning on an image capture device (such as a camera), and presenting, in an area 222, visual data that may be captured by the camera. In some embodiments, in the case that multiple cameras are included, the image preview interface 220 may further include a lens switching control 225. The client device 110 may switch the camera currently in use in response to receiving a trigger on the lens switching control 225. As an example, if the client device 110 includes a front-facing camera and a rear-facing camera, and the rear-facing camera is currently in use, the content that may be captured by the rear-facing camera may be presented in the area 222. The client device 110 may switch to the front-facing camera in response to receiving the trigger on the lens switching control 225, and the content that may be captured by the front-facing camera may be presented in the area 222.

The client device 110 may capture the visual data via the image preview interface 220. The capture trigger modes of the visual data include automatic trigger and user trigger. The automatic trigger may be that in the interaction process between the user and the application or the digital assistant, the client device 110 automatically determines to trigger the capture of the visual data according to the interaction context, and automatically captures, via the image preview interface, the visual data currently presented in the area 222 for object recognition with user confirmation. The user trigger refers to that in the interaction process, it is necessary to receive a trigger from the user on a shooting control (for example, the shooting control 224), and then the visual data is to be captured in response to the trigger. That is, the user trigger requires an explicit indication from the user that the visual data is to be captured, while the automatic trigger does not.

It may be understood that if the visual data is video, the client device 110 may capture at least one video frame, and if the visual data is an image, the client device 110 may capture the image. In some embodiments, in order to ensure that the captured visual data includes as rich content as possible, the visual data captured by the client device 110 may be video. That is, the client device 110 may capture at least one video frame on its own in response to the need that the visual data is to be captured (for example, in response to receiving a capturing trigger for the visual data). In the following, unless otherwise specified, an example in which the client device 110 captures at least one video frame is used for illustration.

In some embodiments, in the case that the video frame is captured in the automatic trigger mode, the client device 110 may further present, in the image preview interface 220, prompt information indicating that the video frame is currently captured in the automatic trigger mode. The prompt information may be any appropriate prompt information such as a prompt text, a prompt symbol, a prompt icon, etc. Only as an example, it may be the prompt text "Sharing your view..." shown in the example 200A. In some embodiments, in the case that the video frame is captured in the automatic trigger mode, the client device 110 may further present a pause control 223. The client device 110 may pause capturing the video frame in the automatic trigger mode in response to receiving a trigger on the pause control 223. Certainly, in some embodiments, the client device 110 may also determine to perform object recognition on the image corresponding to the pause moment (that is, the image or video frame presented in the area 222 at the pause moment) in response to receiving the trigger on the pause control 223.

The image preview interface 220 may further include the shooting control 224. The client device 110 may determine that the capturing trigger mode of the video frame is the user trigger in response to receiving a trigger from a user on the shooting control 224, and then capture video and/or images via the camera. In this case, the client device 110 may further stop capturing the video and/or images in response to the trigger on the shooting control 224 stopping or in response to receiving the trigger on the shooting control 224 again.

For example, the client device 110 may determine that the trigger from the user on the shooting control is received in response to receiving a long press operation on the shooting control 224, and start capturing video via the camera. The client device 110 may then stop capturing video via the camera in response to the long press operation on the shooting control 224 ending. For another example, the client device 110 may determine that the trigger from the user on the shooting control is received in response to receiving a click operation on the shooting control 224, and start capturing video via the camera. The client device 110 may then stop capturing video via the camera in response to receiving the click operation on the shooting control 224 again. It may be understood that if an image is to be captured, the client device 110 may capture the image via the camera in response to receiving another trigger (for example, a click operation) on the shooting control 224 or a trigger on another shooting control corresponding to the image capture.

In some embodiments, the image preview interface 220 may further include a cancel control 221. The client device 110 may respond to a trigger on the cancel control 221 by no longer presenting the content captured by the camera and canceling the presentation of the image preview interface, regardless of whether the video is currently being captured and whether the manner of capturing the video is the user trigger or the automatic trigger. For example, regardless of whether the client device 110 is currently capturing video, the client device 110 may no longer present the image preview interface 220 in response to receiving the trigger on the cancel control 221. In some embodiments, in the case that the image preview interface 220 is presented, the client device 110 may also no longer present the image preview interface 220 in response to receiving the trigger on the visual capture control 211 again. Therefore, multiple controls may be provided on the image preview interface, and the user may use the multiple controls to select when the visual data is to be captured and how the visual data is to be captured, which may improve the convenience of user interaction.

The client device 110 may obtain a label determined based on object recognition performed on the captured video frame. The captured video frame may include a first video frame. The first video frame may be any appropriate video frame in the at least one captured video frame. The recognition result may include the first label corresponding to the first object. The first label may include at least one of a name or a category of the first object. The first label is determined based on the object recognition performed on at least the first video frame that is captured. That is, the first label may be determined based on the object recognition performed on the first video frame, or may be determined based on the object recognition performed on the first video frame and other video frames adjacent to the first video frame.

The client device 110 may present the first label in the image preview interface in response to obtaining the first label corresponding to the first object. For example, the client device 110 may present an example 200B in response to obtaining the first label. The client device 110 may present a "label A" in the image preview interface 220 shown in the example 200B.

In some embodiments, the client device 110 may further continue to capture at least one video frame, and continue to obtain a label determined based on object recognition performed on the newly captured video frame. As an example, the newly captured at least one video frame includes at least a second video frame, and the client device 110 may obtain a second label corresponding to a second object in the second video frame. The client device 110 may replace the first label with the second label in the image preview interface 220 in response to obtaining the second label. For example, if the first label currently presented by the client device 110 in the image preview interface is the "label A", the client device 110 may replace the "label A" with a "label B" (for example, the second label) in the image preview interface in response to obtaining the "label B". Therefore, the client device may continuously capture video frames, and continuously obtain the labels determined based on the object recognition performed on the corresponding video frames. The client device may prompt the user which objects are included in the video frames by providing the labels, so that the user may simply and intuitively know the video content. Embodiments of how to provide the labels will be specifically described below.

In some embodiments, the client device 110 may also control the first label to continue to be presented in the image preview interface for a predetermined time in response to the first object being not recognizable from the subsequently captured video frame, and cancel the presentation of the first label in the image preview interface after the predetermined time. The predetermined time may be any appropriate time such as 5 seconds, 10 seconds, etc. That is, if the client device 110 may no longer subsequently capture an image including the first object, the client device 110 may cancel the presentation of the first label after the first label has been presented for the predetermined time. As an example, if the first object is a certain restaurant, the label currently presented by the client device 110 in the image preview interface may be the label "a certain restaurant". The client device 110 may continue to present the label "a certain restaurant" for a predetermined time (for example, 10 seconds) in response to the certain restaurant being not recognizable from the subsequently captured video frames, and no longer present the label after 10 seconds. Therefore, it may be ensured that the presented label and the video frame are always well matched, which facilitates improving the accuracy of information access for the user.

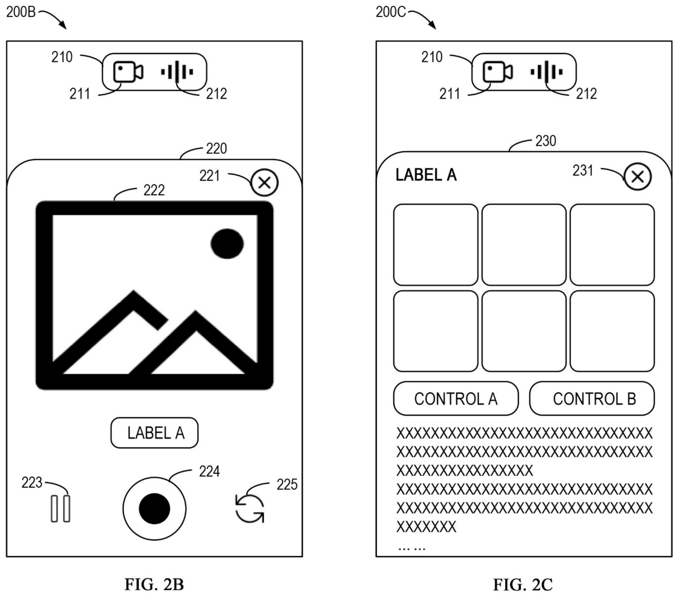

During the period when the first label is presented, the client device 110 may present the first information interface including the information related to the first object in response to the trigger on the first label. Referring to FIG. 2B and FIG. 2C, the client device 110 may present an information interface 230 including information related to the object corresponding to the "label A" in response to receiving a trigger on the "label A". At least one image and/or description text matching the object corresponding to the "label A" may be presented in the information interface 230. The information interface 230 may cover the image preview interface at least partially. That is, the information interface 230 may completely cover the image preview interface 220 (as shown in FIG. 2C), or may only cover a portion of the image preview interface 220. When presenting the information interface 230, the client device 110 may present, in the image preview interface, the video frame captured before the "label A" is triggered. Therefore, the video frame displayed in the image preview interface may be fixed at the moment when the label is clicked, and the video frame corresponding to the label may be intuitively presented, which facilitates improving the accuracy of information access for the user.

The information interface 230 may further include at least one interaction control associated with the object corresponding to the "label A". The at least one interaction control may include, for example, a "control A" and a "control B" shown in an example 200C. Different controls may correspond to different functions. The client device 110 may perform, on the object corresponding to the "label A", an operation corresponding to a target interaction control in response to receiving a trigger on the target interaction control. The at least one interaction control may include any appropriate control such as a navigation control, a reservation control, an order control, a page jump control, and the like.

As an example, if the object corresponding to the "label A" is a restaurant, the at least one interaction control may include a seat reservation control, a navigation control, etc. of the restaurant. If the target interaction control is the navigation control, the client device 110 may present the location of the restaurant and provide a route from the current location to the restaurant in response to receiving a trigger on the navigation control. If the target interaction control is the seat reservation control, the client device 110 may present a reservation interface for the restaurant in response to receiving a trigger on the seat reservation control.

If the object corresponding to the "label A" is a product, the at least one interaction control may include an order control, a page jump control, and the like. If the target interaction control is the order control, the client device 110 may place an order to purchase the corresponding product in response to receiving a trigger on the order control. If the target interaction control is the page jump control, the client device 110 may adjust to a detailed introduction page of the product in response to receiving a trigger on the page jump control.

Certainly, this is only an example, and the specific style of the information interface may be flexibly configured according to the type of the object, the source and availability of the information interface, etc. Therefore, the user may perform the corresponding operation on the object by triggering the interaction control associated with the object, which may improve the convenience and efficiency of performing the operation on the object.

An example of presenting one first label in the image preview interface is described above with reference to FIG. 2B. In some embodiments, the client device 110 may obtain multiple labels and present the multiple labels in different positions. The multiple labels may correspond to the same object, or may correspond to different objects. If the multiple labels all correspond to the same object, the presentation positions of the multiple labels may be determined based on the respective association degrees between the multiple labels and the object. The client device 110 may determine the association degree between the label and the object in any appropriate manner. For example, the client device 110 may determine the association degree between the label and the object based on a priority of a database to which the label belongs. Different databases correspond to different priorities. The higher the priority corresponding to the database, the higher the association degree between the label from the database and the object. For another example, the client device 110 may also determine the association degree by using a trained machine learning model.

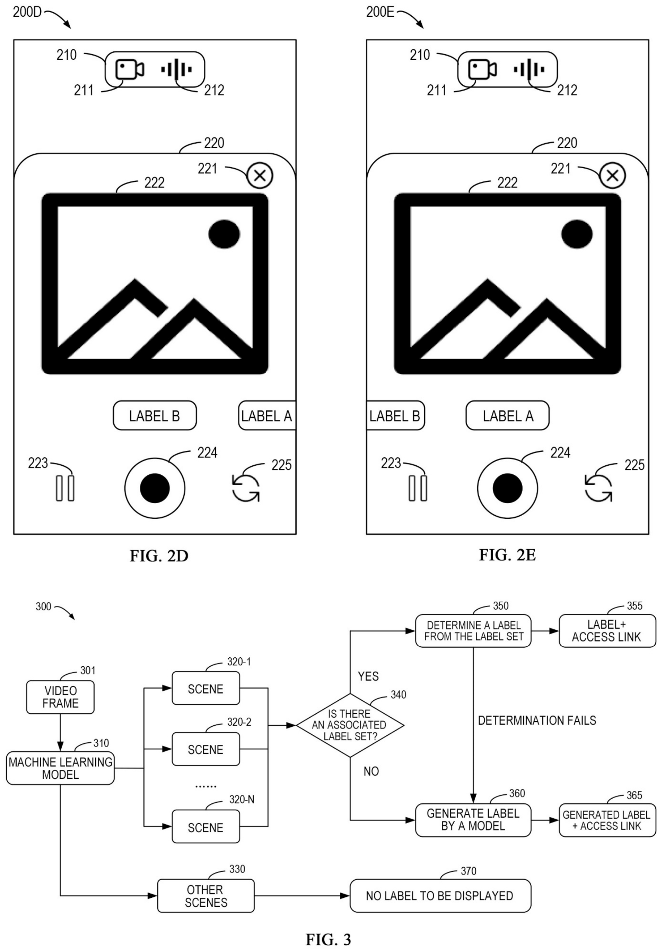

In the case that the multiple labels correspond to the same object, the higher the corresponding association degree, the higher the priority of the presentation position of the label. In some embodiments, the higher the priority of a certain position, the more prominent the position in the interface. For example, the priority of the center position of the interface may be higher than the priority of the corner position of the interface. Referring to FIG. 2D, the client device 110 may present a "label B" and a "label A" corresponding to the same object in the image preview interface 220 shown in an example 200D. If the association degree between the "label B" and the object is higher than the association degree between the "label A" and the object, the client device 110 may determine that the priority of the presentation position corresponding to the "label B" is higher than the priority of the presentation position corresponding to the "label A", and then may present the "label B" in a first position and the "label A" in a second position, where the priority of the first position is higher than the priority of the second position. As an example, the first position may be the central axis, and the second position may be the side.

In the case that the multiple labels correspond to different objects, the presentation positions of the labels may be associated with the importance degrees of the corresponding objects in the interface. The importance degree of an object may be associated with the position of the object in the area 222, the proportion of the object in the area 222, whether the object is prominently presented, and the like. For example, if the area occupied by the object in the area 222 is relatively large, the object is presented in the middle of the area 222, or the object is prominently presented, the importance degree of the object is relatively high, and the priority of the presentation position of the label corresponding to the object is relatively high.

Referring to FIG. 2D, the client device 110 may present the "label B" and the "label A" in the image preview interface 220 shown in the example 200D. If the "label B" and the "label A" correspond to different objects in the area 222, the object corresponding to the "label B" is located at the center of the area 220, and the object corresponding to the "label A" is located at the corner of the area 220, the client device 110 may determine that the importance degree of the object corresponding to the "label B" is relatively high, and the importance degree of the object corresponding to the "label A" is relatively low. The client device 110 may present the "label B" on the central axis and the "label A" on the side to highlight the "label B".

The multiple labels may be determined based on object recognition performed on the same video frame, or may be determined based on object recognition performed on different video frames. If the multiple labels correspond to respective video frames, the presentation positions of the multiple labels may be determined based on the objects respectively corresponding to the multiple labels, and the specific manner of determining the presentation position based on the object will not be repeated here. If the multiple labels correspond to different video frames, the presentation positions of the multiple labels in the image preview interface may be associated with the capture time of the video frames respectively corresponding to the multiple labels.

Referring to FIG. 2D, the client device 110 may present the "label B" and the "label A" in the image preview interface 220 shown in the example 200D. If the video frame corresponding to the "label B" is the video frame currently captured, and the video frame corresponding to the "label A" is the video frame captured 2 seconds ago, the client device 110 may determine that the video frame corresponding to the "label B" is closer to the current time, which may be more in line with user expectations. Then, the "label B" may be presented on the central axis, and the "label A" may be presented on the side to highlight the "label B".

The presentation positions of the multiple labels in the image preview interface may be associated with the capture trigger modes of the video frames respectively corresponding to the multiple labels. For example, referring to FIG. 2D, the client device 110 may present the "label B" and the "label A" in the image preview interface 220 shown in the example 200D. If the capture manner corresponding to the video frame corresponding to the "label B" is the user trigger, and the capture manner corresponding to the video frame corresponding to the "label A" is the automatic trigger, the client device 110 may determine that the video frame corresponding to the "label B" is the video frame actively captured by the user, and the label determined based on such video frame may be more in line with user expectations. Then, the "label B" may be presented in a first position and the "label A" may be presented in a second position to highlight the "label B". It may be understood that the priority of the first position is higher than the priority of the second position.

The client device 110 may also determine the presentation positions of the multiple labels based on any other appropriate manner, which is not limited in the present disclosure. Therefore, the label that the user may be more interested in may be presented in a more prominent position, and the label that the user may not be interested in may be presented in a more concealed position, which may make the user interface more regular and facilitate the user to trigger the label of interest. In some embodiments, the client device 110 may also move the presentation positions of the multiple labels in response to receiving trigger operations from the user on the multiple labels. Referring to FIG. 2D and FIG. 2E, the client device 110 may present an example 200E in response to receiving a leftward slide operation on the multiple labels in the example 200D.

In some embodiments, the client device 110 may also present the multiple labels in different visual styles. For example, if the multiple labels all correspond to the same object, the visual styles of the multiple labels may be determined based on the respective association degrees between the multiple labels and the object. The higher the corresponding association degree, the more prominent the visual style of the label. In the case that the multiple labels correspond to different objects, the visual styles of the labels may be associated with the importance degrees of the corresponding objects in the interface. The higher the importance degree of the object, the more prominent the visual style of the label. If the multiple labels correspond to different video frames, the visual styles of the multiple labels may be associated with the capturing time of the video frames respectively corresponding to the multiple labels. The closer the capturing time of the corresponding video frame is to the current moment, the more prominent the visual style of the label.

Therefore, by presenting the labels in different presentation positions or different visual styles, the label that the user may be more interested in may be presented in a more prominent position, which may facilitate the user to find the label of interest, and view the relevant information of the object corresponding to the label by triggering the label of interest.

Regarding the manner of determining the label, in some embodiments, the client device 110 may use a trained machine learning model to perform object recognition on the captured video frame to determine the label. This machine learning model may be any appropriate machine learning model, for example, a multi-modal large language model (VLM). This machine learning model may also be an image recognition model. This machine learning model may be deployed locally in the client device 110, or may be deployed in other electronic devices (such as the server device 120). If the machine learning model is deployed locally in the client device 110, the client device 110 may directly call the local machine learning model to perform object recognition on the video frame. If the machine learning model is deployed in another electronic device, the client device 110 may provide the captured video frame to the other electronic device via the communication connection with the other electronic device. The other electronic device may perform object recognition on the video frame by the machine learning model, and feed back the recognition result to the client device 110.

FIG. 3 shows an example architecture 300 of determining a label by a model according to some embodiments of the present disclosure. As shown in FIG. 3, the machine learning model 310 may capture and process a video frame 301 to be subjected to object recognition. It may be understood that although only a single video frame is shown, multiple video frames may actually be included. The machine learning model 310 may perform object recognition on only one video frame at each time, or may perform object recognition on multiple video frames at one time. Here, the machine learning model 310 performs object recognition on one video frame at each time as an example for description.

In some embodiments, the machine learning model 310 may determine a scene corresponding to the video frame 301 based on content of the video frame 301. For example, the machine learning model 310 may determine an object type of an object in response to determining that the video frame 301 includes the object, and then determine the scene based on the object type of the object. The machine learning model 310 may pre-store or pre-learn a matching relationship between different object types and different scenes. The machine learning model 310 may determine that the scene corresponding to the video frame 301 is scene A corresponding to object type A in response to determining that the video frame 301 includes object type A.

As an example, the machine learning model 310 may determine that the scene corresponding to the video frame 301 is a text translation scene in response to determining that the video frame 301 includes a foreign language text. The machine learning model 310 may determine that the scene corresponding to the video frame 301 is an entity recognition scene in response to determining that the video frame 301 includes a specific entity type (such as an animal, a plant, an item, a person, etc.). In some embodiments, the machine learning model 310 may determine that the scene corresponding to the video frame 301 is an information extraction scene in response to determining that the video frame 301 includes a text associated with a person (such as a person name, a person description, etc.) or includes a text associated with an event such as a schedule, a meeting, etc.

In some embodiments, the machine learning model 310 may also determine description information of the video frame 301 based on the video frame 301 to describe the scene included in the video frame 301, and then determine the matched scene based on the determined description information. It may be understood that these are only examples, and the machine learning model 310 may also determine the scene corresponding to the video frame 301 in other manners, and the scene may also include any other appropriate scene other than the text translation scene, the entity recognition scene, and the information extraction scene, which is not limited in the present disclosure.

In some embodiments, the client device 110 may pre-store multiple scenes, and the multiple scenes include a part of scenes pre-determined to be associated with label presentation and another part of scenes pre-determined to be not associated with label presentation. As shown in FIG. 3, scenes 320-1, 320-2, ..., 320-N may be scenes pre-determined to be associated with label presentation, where N is any appropriate positive integer, and the scenes 320-1, 320-2, ..., 320-N may be collectively referred to as a group of scenes 320. The other scenes 330 may be scenes pre-determined to be not associated with label presentation. It may be understood that the other scenes 330 may also include one or more scenes.

For example, the client device 110 may use the machine learning model 310 to determine a scene corresponding to the video 301 from the multiple scenes. The client device 110 may further determine (340) whether the scene has an associated label set in response to determining that the scene corresponding to the video frame 301 is a certain scene in the group of predetermined scenes 320, and determine a label corresponding to the object in the video frame 301 based on the determination result.

If it is determined that the scene corresponding to the video frame 301 has an associated label set, the client device 110 may determine (350), based on the video frame 301, whether the label set includes a label matching the object in the video frame 301. Different scenes may correspond to different label sets. In some embodiments, the label in the label set may also be associated with information related to the corresponding object, and the information may be accessed via a predefined access link. It may be understood that the information related to the object may come from any appropriate information source such as a search engine, an encyclopedia, various types of comment data sources (for example, comment platforms such as restaurants, hotels, etc.), a book library, a third-party database, etc., and the access link for accessing the information may be used to access the corresponding information source, for example.

In some embodiments, if the label matching the object in the video frame 301 is determined from the label set associated with the scene, the client device 110 may further extract, based on the label, information related to the object (that is, the object in the video frame 301) corresponding to the label, and determine an access link for the information. For example, the client device 110 may extract the information related to the object based on a predetermined association relationship. Therefore, the client device 110 may determine the label matching the object in the video frame 301 and a predefined access link 355 thereof.

In some embodiments, if the scene corresponding to the video frame 301 does not have an associated label set or the label matching the object in the video frame 301 is not found from the label set, the client device 110 may use (360) the machine learning model to automatically generate the label matching the object in the video frame 301 and an access link 365. The machine learning model used to generate the label may be the machine learning model 310 or another generative machine learning model. In some embodiments, in the case that the label matching the object in the video frame 301 is generated using the machine learning model, the client device 110 may use the machine learning model to generate information related to the object in the video frame 301 as the information accessed by the access link.

Generally, for labels of different scenes, the corresponding information associated with the object may be different. In some embodiments, if the scene 320 corresponding to the video frame 301 is the text translation scene, the label determined by the client device 110 may include a text associated with the foreign language text in the video frame 301 and/or the language corresponding to the foreign language text. For example, if the foreign language text in the video frame 301 is the English text of a certain book, the label may include the title of the book (the title may be an English name or a translated name). In some embodiments, if the title of the book cannot be found, the label may directly include the language to which the foreign language belongs, such as "English". The information related to the object (that is, the foreign language text) corresponding to the label may be the translation result of the foreign language text in the video frame 301 by the machine learning model with a translation function, and/or the relevant content corresponding to the foreign language text.

In some embodiments, if the scene 320 corresponding to the video frame 301 is the information extraction scene, the label determined by the client device 110 may include the type of the extracted information. For example, if the text in the video frame 301 includes at least a contact in the address book, the label may include the text "communication contact information" or a text for describing such information, such as "personal business card", which is not limited in the embodiments of the present disclosure. The information related to the object (that is, the text associated with a contact) corresponding to the label may include the information generated by the model after performing text extraction and/or content understanding on the video frame 301, for example, may include the name and contact information of the contact, and a further interaction control with the contact. The further interaction control may include, for example, an interaction control for adding a contact, and the user may add the contact information of the contact to the address book by triggering the interaction control.

In some embodiments, if the scene 320 corresponding to the video frame 301 is the entity recognition scene, the label determined by the client device 110 may include the name and category of the entity, etc. For example, if the video frame 301 includes an animal, such as a dog, the label may include the text "dog" or the text "animal". The information related to the object (that is, the dog) corresponding to the label may be a specific description of the entity category, such as detailed information about the dog, such as family, living environment, habits, etc.

It may be understood that these are only examples, and the label corresponding to each scene and the information associated with the object corresponding to the label may also include any other appropriate content, which is not limited in the present disclosure.

In some embodiments, the object included in the video frame 301 may be recognized when the scene is determined or when the label needs to be determined or generated. The object recognition may be performed using the machine learning model 310 or another appropriate model. The machine learning model 310 is still taken as an example for description. The machine learning model 310 may be constructed based on an appropriate object recognition algorithm to determine an object from the video frame 301. It may be understood that the successful recognition of the object by the machine learning model 310 depends on the specific content included in the video frame. For example, if only a small area in the video frame includes a small part of the object, the machine learning model 310 may not be able to successfully recognize the object from such a video frame. In some embodiments, in order to let the user know in time whether the object may be recognized from the captured video frame, the client device 110 may provide a predetermined feedback signal in response to recognizing the object from the video frame, and the feedback signal may inform the user that the object is currently recognized.

In some embodiments, the client device 110 may further provide another predetermined feedback signal in response to determining that the object cannot be recognized from the video frame. As an example, the client device 110 may provide a preset sound effect and/or vibration feedback in response to recognizing the object, and may provide feedback text "no object recognized" via the image preview interface in response to being unable to recognize the object. It may be understood that the feedback signal here is only an example, and for example, the client device 110 may also prompt that the object is currently recognized by presenting a predetermined visual effect in the interface (for example, presenting an outline effect in the image preview interface 220), the feedback signal may include any appropriate signal, and the present disclosure does not limit the specific feedback signal.

In some embodiments, if the video frame 301 includes only one object, the machine learning model 310 may directly determine the object as the first object. If the video frame 301 includes multiple objects, the machine learning model 310 may determine the first object from the multiple objects based on the display area, display position, integrity, etc., of the multiple objects. As an example, the first object may be the object occupying the largest area in the video frame 301 or the object located in the foreground, the object located in the central area of the video frame 301, or the most complete object, etc.

In some embodiments, the first object may also be determined from the video frame 301 by any appropriate algorithm or any appropriate model, and the present disclosure does not limit the specific manner of determining the first object. Certainly, in some embodiments, the machine learning model 310 may also determine multiple objects as the first object. There may be diverse rules for determining the object in the video frame, which is not limited in the embodiments of the present disclosure. The machine learning model 310 may determine the scene corresponding to the video frame 301 based on the recognized object name, type, etc.

The machine learning model may provide the determined or generated label to the client device 110. If the video frame 301 includes multiple objects, and each object corresponds to one or more labels, one or more labels corresponding to the video frame 301 may be obtained. When the number of the determined or generated labels is large, only a predetermined number of labels with the highest association degree with the first object in the multiple labels (if the access link is included, the corresponding access link will also be provided) may be provided to the client device 110.

If the machine learning model 310 determines that the current video frame 301 cannot correspond to any scene in the group of predetermined scenes 320, the client device 110 may classify the current video frame 301 as corresponding to the other scenes 330, and then determine (370) that there is no label to be displayed for the current video frame 301.

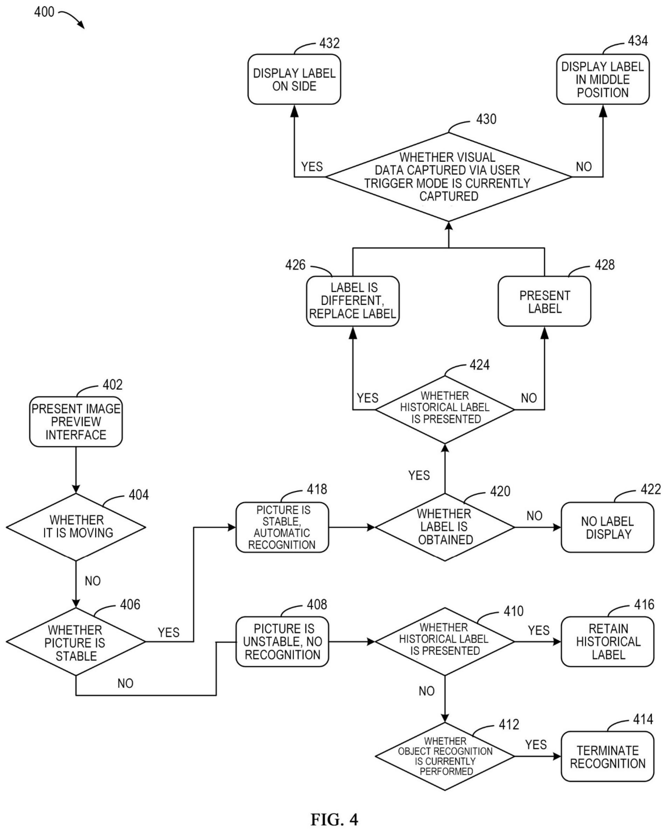

The presentation logic of the label at the client device will be described in more detail with reference to FIG. 4. FIG. 4 shows an example 400 of a label presentation process according to some embodiments of the present disclosure. The example 400 may be implemented at the client device 110. In the example 400, the client device 110 may present (402) the image preview interface of visual data. In the case that the image preview interface is presented, the client device 110 may capture the visual data from the image preview interface via the automatic trigger mode or the user trigger mode, which will not be repeated here.

In the presentation process of the image preview interface, the client device 110 may determine (404) whether it is moving. The client device 110 may use any appropriate manner to determine whether it is moving. For example, the client device 110 may capture relevant data of a gyroscope installed in the client device 110, and determine whether it is moving based on the data of the gyroscope. For another example, the client device 110 may have a positioning function, and may determine that it is moving by detecting real-time changes in the position. In some embodiments, the client device 110 may capture at least one video frame via the image preview interface in response to determining that it is not moving. Therefore, it may be avoided to capture video frames when moving, which not only reduces the power consumption of the device, but also helps to improve the stability of the subsequently captured video frames, thereby improving the accuracy of subsequent image recognition.

The client device 110 may determine (406) whether the picture of the at least one captured video frame is stable. For example, the client device 110 may determine the picture stability of the at least one captured video frame, and determine whether the picture is stable based on the picture stability. As an example, the client device 110 may capture a picture stability threshold, and compare the picture stability with the picture stability threshold. If the picture stability is higher than the picture stability threshold, it may be determined that the picture stability is high and the picture is stable. If the picture stability is lower than the picture stability threshold, it may be determined that the picture stability is low and the picture is unstable.

In some embodiments, if multiple video frames are captured, the client device 110 may determine, based on the multiple captured video frames, content similarity between a first video frame in the multiple video frames and at least one video frame before the first video frame, and determine the picture stability based on the content similarity. The number of the at least one video frame before the first video frame may be a predetermined number, and the predetermined number may be, for example, 3. That is, the client device 110 may determine the similarity between the first video frame and the 3 video frames before the first video frame.

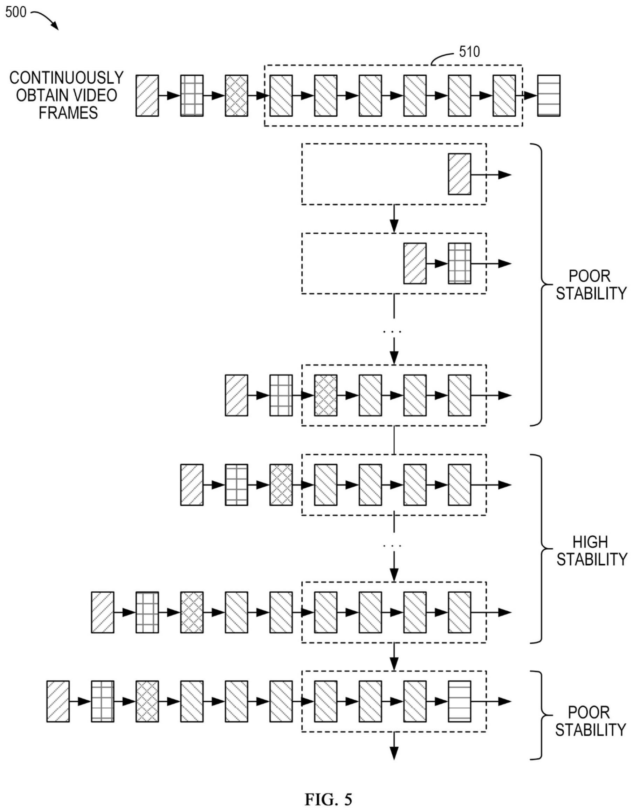

Referring to FIG. 5, FIG. 5 shows an example 500 of multiple captured video frames according to some embodiments of the present disclosure. Taking the multiple video frames continuously obtained by the client device 110 including a group of similar video frames shown by a dotted box 510 (as an example, the content similarity between the group of video frames is higher than the corresponding threshold) as an example, during the video frame capture period, the client device 110 may determine the content similarity between the latest captured video frame and the predetermined number (for example, 3) of video frames before the video frame.

If the number of video frames before the latest captured video frame reaches 3, the client device 110 may determine the content similarity between the latest captured video frame and the 3 video frames before it. The client device 110 may determine that the picture stability is high and at least determine the latest captured video frame as the video frame to be subjected to object recognition in response to the content similarity between the latest captured video frame and the 3 video frames before it reaches the threshold. The client device 110 may also determine that the picture stability is low in response to at least one of the content similarity between the latest captured video frame and the 3 video frames before it not reaching the threshold.

If the number of video frames before the latest captured video frame is less than 3, the client device 110 may directly determine that the picture stability is low. Alternatively or additionally, if the number of video frames before the latest captured video frame is less than 3, the client device 110 may also determine the content similarity between the latest captured video frame and at least one video frame before it, and determine that the picture stability is high and at least determine the latest captured video frame as the video frame to be subjected to object recognition in response to the content similarity reaching the threshold, and determine that the picture stability is low in response to at least one of the content similarity not reaching the threshold.

Referring back to FIG. 4, if the at least one video frame includes the first video frame, the client device 110 may perform object recognition on the at least one video frame based on the picture stability to determine the first label corresponding to the first object in the first video frame. The client device 110 may determine (408) that the picture is unstable and there is no need to perform object recognition on the video frame in response to determining that the picture stability is low. In this case, the client device 110 may determine (410) whether a historical label (this label may be a label determined by performing object recognition on a historical video frame, which may also be referred to as a third label) is currently presented in the image preview interface. If it is determined that the historical label is currently presented in the image preview interface, the client device 110 may retain (416) the historical label. For example, the client device 110 may continue to present the historical label for a predetermined time.

If it is determined that the image preview interface currently does not include a label, the client device 110 may determine (412) whether object recognition is currently performed on a video frame (that is, determine whether there is a video frame on which object recognition is being performed), and the video frame may be previously captured via the automatic trigger mode. If it is determined that the object recognition is currently performed on the video frame, the client device 110 may terminate (414) the object recognition process. That is, there is no need to continue to perform object recognition on the video frame.

The client device 110 may determine (418) that the picture is stable in response to determining that the picture stability is high, and then may automatically perform object recognition on the first video frame captured via the automatic trigger mode. In some embodiments, in order to reduce the amount of computation, the client device 110 may determine whether the historical label determined by performing object recognition on the historical video frame is currently presented in the image preview interface. If it is determined that the historical label is presented, the client device 110 may determine the similarity between the first video frame and the historical video frame. The client device 110 may use any appropriate manner to determine the similarity between different video frames, such as based on a predetermined algorithm, using a machine learning model, or based on a predetermined rule, which is not limited in the present disclosure. The client device 110 may perform object recognition on the first video frame only when the similarity between the first video frame and the historical video frame is lower than a threshold. Therefore, it may be avoided to perform repeated recognition on the same content, which facilitates reducing the amount of computation of the client device 110 and improving the efficiency.

After performing object recognition on the first video frame, the client device 110 may determine (420) whether the first label is obtained. If no label is obtained, the client device 110 may determine (422) that there is no need to display a label. For example, the client device 110 may provide the user with prompt information that no label is obtained. In some embodiments, the prompt information may also inform the user of the reason why the label is not obtained. The prompt information may include, for example, prompt text "no object recognized", "no relevant label found", "poor network speed, data transmission failed", and so on.

If the first label is obtained, the client device 110 may also determine (424) whether the historical label determined by performing object recognition on the historical video frame is currently presented in the image preview interface, and the historical video frame may be captured via the automatic trigger mode (that is, the capture manner of the historical video frame corresponding to the historical label is the same as the capture manner of the first video frame corresponding to the first label). If it is determined that no historical label is presented in the image preview interface, the client device 110 may present (428) the first label in the image preview interface. If it is determined that the historical label is presented in the image preview interface, the client device 110 may determine the similarity between the historical label and the first label. For example, the client device 110 may determine the similarity between the historical label and the first label based on the text in the historical label and the text in the first label. The client device 110 may replace (426) the historical label with the first label in the image preview interface in response to the similarity between the historical label and the first label not reaching the corresponding threshold. The client device 110 may also continue to present the historical label in the image preview interface in response to the similarity between the historical label and the first label reaching the corresponding threshold.

Further, in some embodiments, the client device 110 may also determine (430) whether the visual data captured via the user trigger mode is currently captured. For example, the client device 110 may determine whether the trigger from the user on the shooting control in the image preview interface is received, and determine that the visual data captured via the user trigger mode is obtained in response to receiving the trigger. The client device 110 may determine that the label corresponding to this visual data is to be presented in the first position (for example, the middle position) with a higher priority in response to determining that there is currently visual data captured via the user trigger mode. In this case, the client device 110 may present (432) the first label in the second position (for example, the side) with a lower priority. The client device 110 may present (434) the first label in the first position in response to determining that there is no visual data captured via the user trigger mode.

In summary, in the case that the image preview interface currently does not present any label, the client device 110 may directly present the first label in the first position of the image preview interface. In the case that a label is currently presented in the first position of the image preview interface, the client device 110 may keep presenting the label in the first position and present the first label that is obtained in the second position in response to the capturing trigger mode of the video frame corresponding to the label being the user trigger. This may ensure that the label expected to be recognized by the user will not be moved and may always be presented in a convenient position. The automatically and additionally recognized label may be presented in other positions for the user to choose when needed. If the capturing trigger mode of the video frame corresponding to the previous label is the automatic trigger, the previous label may be replaced with the latest determined first label in the first position.

To sum up, according to the embodiments of the present disclosure, automatic object recognition may be performed on the environment where the client device is located via the image preview interface, and the label is automatically determined for presentation in the image preview interface. In this way, the user may trigger the label as needed to obtain more relevant information about the objects appearing in the environment. This may enable automatic object recognition of the visual data and more interactions based on the recognition results, improving the convenience of information access and interaction efficiency for the user.

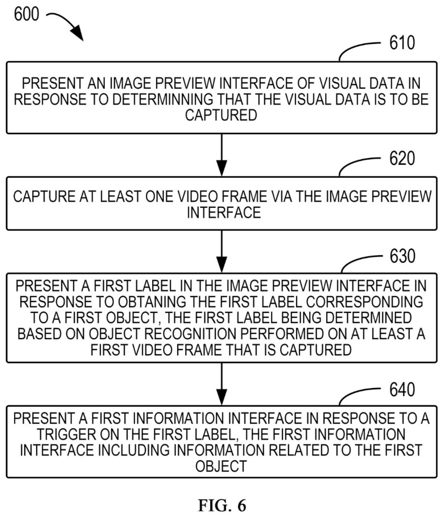

FIG. 6 shows a flowchart of a method 600 for image recognition according to some embodiments of the present disclosure. The method 600 may be implemented at the client device 110 of FIG. 1. The method 600 will be described with reference to the environment 100 of FIG. 1.

At block 610, the client device 110 presents an image preview interface of visual data in response to determining that the visual data is to be captured.

At block 620, the client device 110 captures at least one video frame via the image preview interface.

At block 630, the client device 110 presents a first label in the image preview interface in response to obtaining the first label corresponding to a first object, the first label being determined based on object recognition performed on at least a first video frame that is captured.

At block 640, the client device 110 presents a first information interface in response to a trigger on the first label, the first information interface including information related to the first object.

In some embodiments, the first label includes at least one of a name or a category of the first object.

In some embodiments, the method 600 further includes: providing a predetermined feedback signal in response to recognizing the first object from at least the first video frame that is captured.

In some embodiments, the method 600 further includes: replacing, in the image preview interface, the first label with a second label e in response to obtaining the second label corresponding to a second object, the second label being determined based on object recognition performed on at least a second video frame that is captured.

In some embodiments, the method 600 further includes: controlling, in response to the first object being not recognizable from a subsequently captured video frame, the first label to continue to be presented in the image preview interface for a predetermined time; and canceling a presentation of the first label in the image preview interface after the predetermined time.

In some embodiments, the first information interface at least partially covers the image preview interface, and the image preview interface presents visual data captured before the trigger on the first label.

In some embodiments, the method 600 further includes: determining picture stability based on the at least one captured video frame, the at least one video frame including the first video frame; and performing object recognition on the at least one video frame based on the picture stability to determine the first label.

In some embodiments, determining the image stability based on the at least one captured video frame includes: determining content similarity between the first video frame in a plurality of captured video frames and at least one video frame prior to the first video frame based on the plurality of video frames; and performing object recognition on the at least one video frame based on the image stability includes: determining, in response to the content similarity between the first video frame and the at least one video frame prior to the first video frame all reaching a first threshold, at least the first video frame as a video frame on which object recognition to be performed, where the first label is determined based on object recognition performed on the first video frame.

In some embodiments, the method 600 further includes: determining, in response to failing to determine a label from a captured video frame, whether the image preview interface presents a third label corresponding to a third object, where the third label is determined based on object recognition performed on a historical video frame; retaining a presentation of the third label in the image preview interface in response to that the image preview interface presents the third label; determining, in response to that the image preview interface fails to present the third label, whether there is a video frame on which object recognition is currently performed; and indicating to terminate object recognition on the video frame in response to determining that there is a video frame on which object recognition is currently performed.

In some embodiments, presenting the first label in the image preview interface includes: determining whether the image preview interface presents a third label corresponding to a third object, the third label being determined based on object recognition performed on a historical video frame; and presenting the first label in a first position of the image preview interface in response to the third label not being presented in the image preview interface.

In some embodiments, presenting the first label in the image preview interface includes: determining similarity between the third label and the first label in response to that the image preview interface presents the third label; and replacing the third label with the first label in the image preview interface in response to the similarity failing to reach a second threshold.

In some embodiments, presenting the first label in the image preview interface further includes: determining, in response to that the image preview interface presents the third label, a capturing trigger mode of a historical video frame corresponding to the third label, the trigger mode including an automatic trigger or a user trigger; presenting the first label in a second position of the image preview interface in response to the capturing trigger mode of the historical video frame corresponding to the third label being the user trigger, the third label being kept presented in the first position; and replacing the third label presented in the first position with the first label in the image preview interface in response to the capturing trigger mode of the historical video frame corresponding to the third label being the automatic trigger.

In some embodiments, the first information interface further includes at least one interaction control related to the first object, and the method 600 further includes: performing, on the first object, an operation corresponding to a target interaction control of the at least one interaction control in response to receiving a trigger on the target interaction control.

In some embodiments, the at least one interaction control includes a navigation control, a reservation control, an order control, or a page jump control.

In some embodiments, obtaining the first label corresponding to the first object includes: determining a first scene corresponding to the first video frame from multiple scenes based on at least the first video frame that is captured; and determining, in response to the first scene having an associated label set, the first label matching the first object from the label set based on the first video frame; or generating the first label with a machine learning model in response to the first scene not having an associated label set or there being no label in the label set matching the first object.

In some embodiments, the information related to the first object is determined through: extracting the information related to the first object in response to determining the first label matching the first object from the label set; and generating the information related to the first object with the machine learning model in response to the first scene not having the associated label set or there being no label in the label set matching the first object.

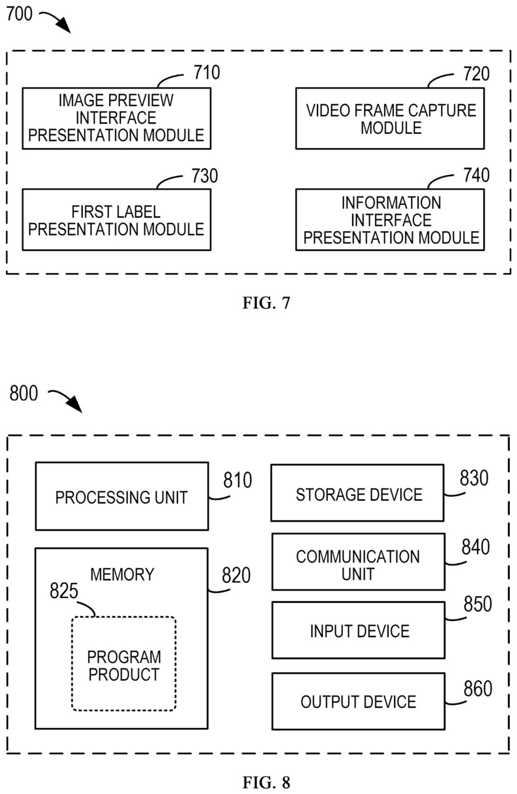

The embodiments of the present disclosure further provide corresponding apparatuses for implementing the above methods or processes. FIG. 7 shows an illustrative structural block diagram of an apparatus 700 for image recognition according to some embodiments of the present disclosure. The apparatus 700 may be implemented as or included in the client device 110. Each module/component in the apparatus 700 may be implemented by hardware, software, firmware, or any combination thereof.

As shown in FIG. 7, the apparatus 700 includes an image preview interface presentation module 710 configured to present an image preview interface of visual data in response to determining that the visual data is to be captured. The apparatus 700 further includes a video frame capture module 720 configured to capture at least one video frame via the image preview interface. The apparatus 700 further includes a first label presentation module 730 configured to present a first label in the image preview interface in response to obtaining the first label corresponding to a first object, the first label being determined based on object recognition performed on at least a first video frame that is captured. The apparatus 700 further includes an information interface presentation module 740 configured to present a first information interface in response to a trigger on the first label, the first information interface including information related to the first object.

In some embodiments, the first label includes at least one of a name or a category of the first object.

In some embodiments, the apparatus 700 further includes: a feedback signal provision module configured to provide a predetermined feedback signal in response to recognizing the first object from at least the first video frame that is captured.

In some embodiments, the apparatus 700 further includes: a replacing module configured to replace, in the image preview interface, the first label with a second label in response to obtaining the second label corresponding to a second object, the second label being determined based on object recognition performed on at least a second video frame that is captured.

In some embodiments, the apparatus 700 further includes: a continuing presentation module configured to control, in response to the first object being not recognizable from a subsequently captured video frame, the first label to continue to be presented in the image preview interface for a predetermined time; and a canceling module configured to cancel a presentation of the first label in the image preview interface after the predetermined time.

In some embodiments, the first information interface at least partially covers the image preview interface, and the image preview interface presents visual data captured before the trigger on the first label.

In some embodiments, the apparatus 700 further includes: a stability determination module configured to determine image stability based on the at least one captured video frame, the at least one video frame including the first video frame; and a recognition module configured to perform object recognition on the at least one video frame based on the image stability to determine the first label.

In some embodiments, the stability determination module is further configured to determine content similarity between the first video frame in a plurality of captured video frames and at least one video frame prior to the first video frame based on the plurality of video frames; and the recognition module is further configured to determine, in response to the content similarity between the first video frame and the at least one video frame prior to the first video frame all reaching a first threshold, at least the first video frame as a video frame on which object recognition to be performed, where the first label is determined based on object recognition performed on the first video frame.

In some embodiments, the apparatus 700 further includes: a first determination module configured to determine, in response to failing to determine a label from a captured video frame, whether the image preview interface presents a third label corresponding to a third object, where the third label is determined based on object recognition performed on a historical video frame; a label retaining module configured to retain a presentation of the third label in the image preview interface in response to that the image preview interface presents the third label; a second determination module configured to determine, in response to that the image preview interface fails to present the third label, whether there is a video frame on which object recognition is currently performed; and a terminating module configured to indicate to terminate object recognition on the video frame in response to determining that there is a video frame on which object recognition is currently performed.

In some embodiments, the first label presentation module 730 is further configured to determine whether the image preview interface presents a third label corresponding to a third object, the third label being determined based on object recognition performed on the historical video frame; and present the first label in a first position of the image preview interface in response to the third label not being presented in the image preview interface.

In some embodiments, the first label presentation module 730 is further configured to determine similarity between the third label and the first label in response to that the image preview interface presents the third label; and replace the third label with the first label in the image preview interface in response to the similarity failing to reach a second threshold.

In some embodiments, the first label presentation module 730 is further configured to determine, in response to that the image preview interface presents the third label, a capturing trigger mode of a historical video frame corresponding to the third label, the trigger mode including an automatic trigger or a user trigger; present the first label in a second position of the image preview interface in response to the capturing trigger mode of the historical video frame corresponding to the third label being the user trigger, the third label being kept presented in the first position; and replace the third label presented in the first position with the first label in the image preview interface in response to the capturing trigger mode of the historical video frame corresponding to the third label being the automatic trigger.

In some embodiments, the first information interface further includes at least one interaction control related to the first object, and the apparatus 700 further includes: an operation execution module configured to perform, for the first object, an operation corresponding to a target interaction control of the at least one interaction control in response to receiving a trigger on the target interaction control.

In some embodiments, the at least one interaction control includes a navigation control, a reservation control, an order control, or a page jump control.

In some embodiments, obtaining the first label corresponding to the first object includes: determining a first scene corresponding to the first video frame from multiple scenes based on at least the first video frame that is captured; and determining, in response to the first scene having an associated label set, the first label matching the first object from the label set based on the first video frame; or generating the first label with a machine learning model in response to the first scene not having an associated label set or there being no label in the label set matching the first object.

In some embodiments, the information related to the first object is determined through: extracting the information related to the first object in response to determining the first label matching the first object from the label set; and generating the information related to the first object with the machine learning model in response to the first scene not having the associated label set or there being no label in the label set matching the first object.

The units and/or modules included in the apparatus 700 may be implemented in various ways, including software, hardware, firmware, or any combination thereof. In some embodiments, one or more units and/or modules may be implemented using software and/or firmware, such as machine-executable instructions stored on a storage medium. In addition to machine-executable instructions or as an alternative, some or all units and/or modules in the apparatus 700 may be implemented at least partially by one or more hardware logic components. As an example, rather than a limitation, example types of hardware logic components that may be used include field programmable gate arrays (FPGAs), application specific integrated circuits (ASICs), application specific standards (ASSPs), system on chips (SOCs), complex programmable logic devices (CPLDs), and so on.

It should be understood that one or more steps of the above method may be performed by an appropriate electronic device or a combination of electronic devices. Such an electronic device or a combination of electronic devices may include, for example, the client device 110 and/or the server device 120 in FIG. 1.

FIG. 8 shows a block diagram of an electronic device 800 in which one or more embodiments of the present disclosure may be implemented. It should be understood that the electronic device 800 shown in FIG. 8 is only illustrative, and should not constitute any limitation on the function and scope of the embodiments described herein. The electronic device 800 shown in FIG. 8 may be used to implement the client device 110 and/or the server device 120 in FIG. 1.

As shown in FIG. 8, the electronic device 800 is in the form of a general electronic device. The components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and may execute various processes based on the programs stored in the memory 820. In a multi-processor system, multiple processing units execute computer-executable instructions in parallel to improve the parallel processing capability of the electronic device 800.

The electronic device 800 typically includes multiple computer storage medium. Such medium may be any available medium that is accessible to the electronic device 800, including, but not limited to, volatile and non-volatile medium, removable and non-removable medium. The memory 820 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 830 may be any removable or non-removable medium, and may include a machine-readable medium such as a flash drive, a disk, or any other medium, which may be used to store information and/or data and may be accessed within the electronic device 800.

The electronic device 800 may further include other removable/non-removable, volatile/non-volatile memory medium. Although not shown in FIG. 8, it is possible to provide a disk driver for reading from or writing to a removable, non-volatile disk (such as a "floppy disk"), and an optical disk driver for reading from or writing to a removable, non-volatile optical disk. In these cases, each driver may be connected to the bus (not shown) by one or more data medium interfaces. The memory 820 may include a computer program product 825 having one or more program modules configured to perform various methods or acts of various embodiments of the present disclosure.

The communication unit 840 implements communication with other electronic devices through the communication medium. In addition, the functions of the components of the electronic device 800 may be implemented by a single computing cluster or multiple computing machines, which may communicate through a communication connection. Therefore, the electronic device 800 may use a logical connection with one or more other servers, a network personal computer (PC) or another network node to operate in a networked environment.

The input device 850 may be one or more input devices, such as a mouse, a keyboard, a tracking ball, etc. The output device 860 may be one or more output devices, such as a display, a speaker, a printer, etc. The electronic device 800 may further communicate with one or more external devices (not shown) through the communication unit 840 as needed, the external devices such as a storage device, a display device, etc., communicate with one or more devices that enable the user to interact with the electronic device 800, or communicate with any devices (such as a network card, a modem, etc.) that enable the electronic device 800 to communicate with one or more other electronic devices. Such communication may be performed via input/output (I/O) interfaces (not shown).

According to an illustrative implementation of the present disclosure, a computer-readable storage medium is provided, on which computer-executable instructions are stored, where the computer-executable instructions are executed by a processor to implement the method described above. According to an illustrative implementation of the present disclosure, there is further provided a computer program product, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices and computer program products implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, create an apparatus for implementing functions/acts specified in one or more blocks of the flowcharts and/or block diagrams. These computer-readable program instructions may also be stored in a computer-readable storage medium, which instructions cause a computer, a programmable data processing apparatus, and/or other devices to operate in a particular manner, such that the computer-readable medium storing the instructions includes an article of manufacture including instructions for implementing various aspects of the functions/acts specified in one or more blocks of the flowcharts and/or block diagrams.

The computer-readable program instructions may be loaded onto a computer, other programmable data processing apparatus, or other devices, causing a series of operational steps to be performed on the computer, other programmable data processing apparatus, or other devices to produce a computer-implemented process, such that the instructions executed on the computer, other programmable data processing apparatus, or other devices implement the functions/acts specified in one or more blocks of the flowcharts and/or block diagrams.

The flowcharts and block diagrams in the drawings show the possibly implemented architectures, functions and operations of the systems, methods and computer program products according to multiple implementations of the present disclosure. In this regard, each block in the flowchart or block diagram may represent a module, program segment or part of an instruction, which contains one or more executable instructions for implementing the specified logical functions. In some updated implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and combinations of the blocks in the block diagrams and/or flowcharts may be implemented by a special-purpose hardware-based system that perform specified functions or acts, or may be implemented by a combination of special-purpose hardware and computer instructions.

The implementations of the present disclosure have been described above, and the above description is illustrative, non-exhaustive, and is not limited to the disclosed implementations. Many modifications and variations will be apparent to those of ordinary skill in the art without departing from the scope of the described implementations. The choice of terms used herein is intended to best explain the principles, practical applications, or improvements to the technology in the market of each implementation, or to enable other ordinary skilled in the art to understand the various implementations disclosed herein.

## Claims

1. A method (600) for image recognition, comprising:
presenting (610) an image preview interface of visual data in response to determining that the visual data is to be captured;
capturing (620) at least one video frame via the image preview interface;
presenting (630) a first label in the image preview interface in response to obtaining the first label corresponding to a first object, the first label being determined based on object recognition performed on at least a first video frame that is captured; and
presenting (640) a first information interface in response to a trigger on the first label, the first information interface comprising information related to the first object.

2. The method of claim 1, wherein the first label comprises at least one of a name or a category of the first object.

3. The method of claim 1 or 2, further comprising:
providing a predetermined feedback signal in response to recognizing the first object from at least the first video frame that is captured.

4. The method of any of claims 1 to 3, further comprising:
replacing, in the image preview interface, the first label with a second label in response to obtaining the second label corresponding to a second object, the second label being determined based on object recognition performed on at least a second video frame that is captured.

5. The method of any of claims 1 to 4, further comprising:
controlling, in response to the first object being not recognizable from a subsequently captured video frame, the first label to continue to be presented in the image preview interface for a predetermined time; and
canceling a presentation of the first label in the image preview interface after the predetermined time.

6. The method of any of claims 1 to 5, wherein the first information interface at least partially covers the image preview interface, and
wherein the image preview interface presents visual data captured before the trigger on the first label.

7. The method of any of claims 1 to 6, further comprising:
determining image stability based on at least one captured video frame, the at least one video frame comprising the first video frame; and
performing object recognition on the at least one video frame based on the image stability to determine the first label, and optionally wherein determining the image stability based on the at least one captured video frame comprises:
determining content similarity between the first video frame in a plurality of captured video frames and at least one video frame prior to the first video frame based on the plurality of video frames; and
wherein performing object recognition on the at least one video frame based on the image stability comprises:
determining, in response to the content similarity between the first video frame and the at least one video frame prior to the first video frame all reaching a first threshold, at least the first video frame as a video frame on which object recognition to be performed,
wherein the first label is determined based on object recognition performed on the first video frame.

8. The method of claim 1, further comprising:
determining, in response to failing to determine a label from a captured video frame, whether the image preview interface presents a third label corresponding to a third object, wherein the third label is determined based on object recognition performed on a historical video frame;
retaining a presentation of the third label in the image preview interface in response to that the image preview interface presents the third label;
determining, in response to that the image preview interface fails to present the third label, whether there is a video frame on which object recognition is currently performed; and
indicating to terminate object recognition on the video frame in response to determining that there is a video frame on which object recognition is currently performed.

9. The method of claim 1, wherein presenting the first label in the image preview interface comprises:
determining whether the image preview interface presents a third label corresponding to a third object, the third label being determined based on object recognition performed on a historical video frame; and
presenting the first label in a first position of the image preview interface in response to the third label not being presented in the image preview interface, and optionally, wherein presenting the first label in the image preview interface comprises:
determining similarity between the third label and the first label in response to that the image preview interface presents the third label; and
replacing the third label with the first label in the image preview interface in response to the similarity failing to reach a second threshold, and
determining, in response to that the image preview interface presents the third label, a capturing trigger mode of a historical video frame corresponding to the third label, the trigger mode comprising an automatic trigger or a user trigger;
presenting the first label in a second position of the image preview interface in response to the capturing trigger mode of the historical video frame corresponding to the third label being the user trigger, the third label being kept presented in the first position; and
replacing the third label presented in the first position with the first label in the image preview interface in response to the capturing trigger mode of the historical video frame corresponding to the third label being the automatic trigger.

10. The method of claim 1, wherein the first information interface further comprises at least one interaction control related to the first object, the method further comprising:
performing, for the first object, an operation corresponding to a target interaction control of the at least one interaction control in response to receiving a trigger on the target interaction control, and optionally,
wherein the at least one interaction control comprises at least one of: a navigation control, a reservation control, an order control, or a page jump control.

11. The method of claim 1, wherein obtaining the first label corresponding to the first object comprises:
determining a first scene corresponding to the first video frame from a plurality of scenes based on at least the first video frame that is captured;
determining, in response to the first scene having an associated label set, the first label matching the first object from the label set based on the first video frame; or
generating the first label with a machine learning model in response to the first scene not having an associated label set or there being no label in the label set matching the first object, and optionally,
wherein the information related to the first object is determined through:
extracting the information related to the first object in response to determining the first label matching the first object from the label set; and
generating the information related to the first object with the machine learning model in response to the first scene not having the associated label set or there being no label in the label set matching the first object.

12. An apparatus (700) for image recognition, comprising:
an image preview interface presentation module (710) configured to present an image preview interface of visual data in response to determining that the visual data is captured;
a video frame capture module (720) configured to capture at least one video frame via the image preview interface;
a first label presentation module (730) configured to present a first label in the image preview interface in response to obtaining the first label corresponding to a first object, the first label being determined based on object recognition performed on at least a first video frame that is captured; and
an information interface presentation module (740) configured to present a first information interface in response to a trigger on the first label, the first information interface comprising information related to the first object.

13. An electronic device (800), comprising:
at least one processing unit (810); and
at least one memory (820), the at least one memory (820) being coupled to the at least one processing unit (810) and storing instructions executable by the at least one processing unit (810), the instructions, when executed by the at least one processing unit (810), causing the electronic device (800) to perform the method (600) of any of claims 1 to 11.

14. A computer-readable storage medium having a computer program stored thereon, the computer program being executable by a processor to implement the method (600) of any of claims 1 to 11.

15. A computer program product (825) comprising a computer program, wherein the computer program (825), when executed by a processor, implements the method (600) of any of claims 1 to 11.
